# FASCICULE DE BREVET EUROPEEN

(11) **EP 1 320 838 B1**
(45) Date de publication et mention de la délivrance du brevet: **17.08.2005**
(21) Numéro de dépôt: 01947566.4
(22) Date de dépôt: 21.06.2001
(51) Int. Cl.: G07F 17/24, G07C 1/30, G07B 15/00

(54) **ENSEMBLE PERMETTANT DE LIRE AUTOMATIQUEMENT UNE INFORMATION ET SYSTEME DE CONTROLE OU DE SUIVI A DISTANCE COMPORTANT AU MOINS UN TEL ENSEMBLE**
ANORDNUNG ZUM AUTOMATISCHEN LESEN EINER INFORMATION UND SYSTEM ZUR KONTROLLE UND ZUR FERNÜBERWACHUNG MIT MINDESTENS EINER SOLCHEN ANORDNUNG
SET FOR AUTOMATICALLY READING AN INFORMATION AND FOR REMOTE CONTROL OR MONITORING SYSTEM COMPRISING AT LEAST SUCH A SET

(30) Priorité: 22.06.2000 FR 0008000
(43) Date de publication de la demande: 25.06.2003
(73) Titulaire: Bouygues Telecom, 92100 Boulogne Billancourt (FR)
(72) Inventeur: MASCLET, Sophie, F-92310 Sevres (FR); GAILLOTTE, Nicolas, F-94100 Saint-Maur-des-Fosses (FR)
(74) Mandataire: Callon de Lamarck, Jean-Robert
(86) Numéro de dépôt international: PCT/FR2001/001953
(87) Numéro de publication internationale: WO 2001/099066

(56) Documents cités:
- EP-A- 0 940 783
- WO-A-97/19568
- WO-A-98/58510
- WO-A-99/48062
- US-A- 5 905 247

## Description

La présente invention est relative à un ensemble pour lire automatiquement une information et à un système de contrôle ou de suivi à distance comportant au moins un tel ensemble.

L'invention trouve notamment avantageusement application pour le contrôle à distance de paiement de redevances de stationnement ou encore pour l'identification et le suivi à distance d'objets mobiles.

On connaît déjà des systèmes permettant le paiement de redevances de stationnement à distance.

Avec de tels systèmes, un utilisateur, lorsqu'il se gare, appelle, par exemple au moyen de son téléphone portable, un centre de gestion de paiement de redevances qui identifie cet utilisateur et le cas échéant la zone géographique dans laquelle il gare son véhicule.

Son appel déclenche le paiement d'une somme correspondant à un temps de stationnement donné.

Pour contrôler que des véhicules stationnant dans une zone donnée ont bien fait l'objet d'un paiement de redevance de stationnement à un instant donné, le personnel de contrôle interroge à distance le serveur en lui communiquant par exemple le numéro du véhicule contrôlé. En réponse, le serveur indique si le véhicule en question est enregistré dans sa base de données comme ayant fait l'objet d'un paiement de redevance de stationnement.

Pour simplifier l'opération consistant pour le personnel de contrôle à relever les numéros des véhicules et à les transmettre par téléphone au serveur, il a déjà été proposé d'équiper le personnel de contrôle de moyens de lecture automatique permettant de lire des moyens d'identification, par exemple de type à codes barres, portés par les véhicules. Ces moyens de lecture automatique intègrent un terminal qui gère la lecture du code d'identification et les échanges avec le serveur et qui comporte des moyens d'interface permettant au personnel de contrôle de déclencher une séquence de lecture de code d'identification et d'interrogation de serveur.

Ce terminal et ses moyens d'interface sont spécifiquement dédiés à cette utilisation.

Un tel matériel présente l'inconvénient majeur d'être encombrant et peu pratique pour le personnel de contrôle.

Le document US 5 905 247 décrit quant à lui un système de paiement selon la partie préambule de la revendication 1.

L'invention propose quant à elle un ensemble pour lire automatiquement une information portée par une étiquette à code barre ou à transpondeur ou par des moyens de stockage d'information analogues, qui est particulièrement simple d'utilisation et peu encombrant.

Cet ensemble est avantageusement utilisé pour mettre en oeùvre des suivis à distance d'objets mobiles ou des contrôles sur ceux-ci.

Ainsi, l'invention propose un ensemble selon la revendication 1.

Notamment, l'information portée par les moyens de stockage peut comporter un code identifiant un élément sur lequel lesdits moyens de stockage sont rapportés et en ce que le terminal téléphonique mobile comporte des moyens pour déclencher et gérer une séquence d'opérations comportant dans l'ordre :
- la lecture dudit code par le module de lecture,
- la transmission dudit code, par ledit terminal téléphonique, à un serveur de gestion à distance.

Avantageusement, en outre, ladite séquence d'opérations comporte :
- la transmission à destination de l'utilisateur du terminal téléphonique d'un message transmis en réponse par le serveur de gestion audit terminal.

L'ensemble proposé par l'invention est en outre avantageusement complété par les différentes caractéristiques suivantes prises seules ou selon toutes leurs combinaisons possibles:
- la fixation mécanique du module de lecture est amovible ;
- le terminal téléphonique comporte des moyens de gestion qui affichent sur un écran dudit terminal une information lue par le module de lecture et/ou un message transmis en réponse par ledit serveur audit terminal ;
- le module de lecture et les moyens de stockage d'information comportent des moyens permettant audit module d'enregistrer des informations sur lesdits moyens de stockage ;
- pour le contrôle à distance du paiement de redevances de stationnement, il comporte un ensemble selon la revendication 8.

L'invention concerne également un module de lecture selon la revendication 9.

Avantageusement, il comporte d'une part des moyens d'émission/réception qui sont aptes à émettre un signal d'interrogation à destination de moyens de stockage d'information de type à transpondeur et à recevoir le signal émis en réponse par ceux-ci, et d'autre part des moyens qui sont reliés à ces moyens d'émission/réception et qui gèrent les échanges dudit module avec le terminal téléphonique mobile.

Par ailleurs, l'invention propose également un terminal téléphonique mobile, selon la revendication 12.

Avantageusement, l'information portée par les moyens de stockage comporte un code identifiant un élément mobile sur lequel lesdits moyens de stockage sont rapportés, ledit terminal comportant des moyens pour déclencher et gérer une séquence d'opérations comportant dans l'ordre :
- la lecture du code par le module de lecture,
- la transmission dudit code, par ledit terminal téléphonique, à un serveur de gestion à distance.

De préférence, ladite séquence d'opérations comporte en outre
- la transmission à destination de l'utilisateur du terminal téléphonique d'un message transmis en réponse par le serveur de gestion audit terminal.

Enfin, l'invention propose également un système selon la revendication 1.

Notamment, l'invention propose un système pour le contrôle à distance du paiement de redevances de stationnement, caractérisé en ce qu'il est constitué par un système du type précité, les moyens d'identification étant aptes à être rapportés sur des véhicules, le serveur étant un serveur pour la gestion du paiement à distance de redevances de stationnement apte à vérifier si des redevances ont été acquittées pour un véhicule dont le code a été transmis.

D'autres caractéristiques et avantages de l'invention ressortiront encore de la description qui suit, laquelle est purement illustrative et non limitative et qui doit être lue en regard des dessins annexés sur lesquels :
- la figure 1 est une représentation schématique illustrant le principe d'un système conforme à un mode de réalisation possible de l'invention ;
- la figure 2 est une représentation schématique illustrant les échanges entre les différents éléments du système de la figure 1.

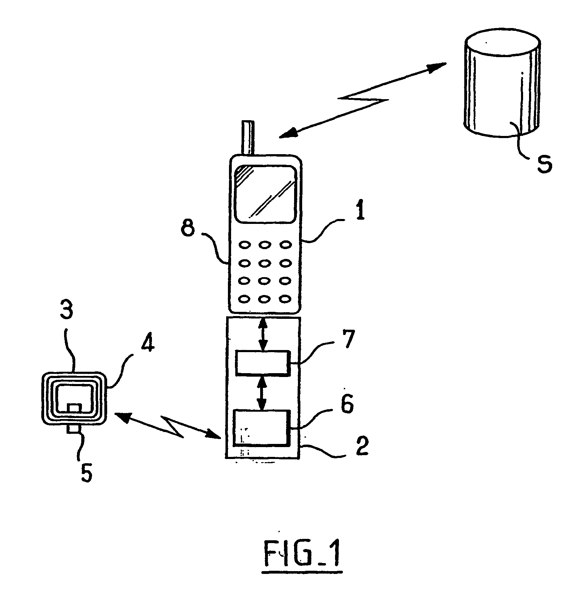

Le système de contrôle qui est illustré sur la figure 1 comporte un serveur S de gestion de redevances de stationnement, ainsi qu'un terminal téléphonique mobile 1 sur lequel est connecté mécaniquement et électriquement un module 2 apte à lire un code d'identification porté par des moyens 3 destinés à être eux-mêmes rapportés sur un véhicule automobile.

Par terminal téléphonique mobile, on entend ici tout terminal mobile classique permettant des communications par voie hertzienne, tel qu'un téléphone portable à clavier de numérotation et écran ou un terminal de type assistant personnel intégrant des moyens de communication.

Les moyens 3 sont avantageusement constitués par une étiquette à transpondeur comportant un bobinage d'antenne 4 et une mémoire 5, cette étiquette à transpondeur étant par exemple collée sur un pare-brise de véhicule.

Le module 2 permettant de lire le code stocké dans la mémoire 5 comporte des moyens 6 d'émission/réception de signaux radio-fréquences, qui sont aptes à émettre un signal d'interrogation à destination d'une étiquette 3 à transpondeur et à recevoir le signal émis en réponse par celle-ci.

Il comporte également des moyens 7, qui sont reliés à ces moyens d'émission/réception 6 et qui gère les échanges dudit module 2 avec le terminal téléphonique mobile 1.

Par ailleurs, ce module 2 et le terminal téléphonique portable 1 comportent avantageusement des moyens complémentaires assurant la fixation mécanique dudit module 2 sur le terminal portable 1. Cette fixation est préférentiellement de type amovible.

Le terminal téléphonique mobile 1 comporte quant à lui des moyens 8 pour permettre à un opérateur d'actionner ledit terminal pour déclencher et gérer une séquence d'opérations comportant dans l'ordre :
- la lecture par ledit module 2 du code porté par les moyens d'identification 3, le code lu étant transmis par ledit module 2 au terminal téléphonique portable 1,
- la transmission dudit code au serveur de contrôle S par ledit terminal téléphonique portable 1,
- l'affichage d'un message transmis en réponse par le serveur de contrôle 1 audit terminal téléphonique portable 1.

Ces moyens 8 sont par exemple constitués par une programmation particulière de la carte SIM.

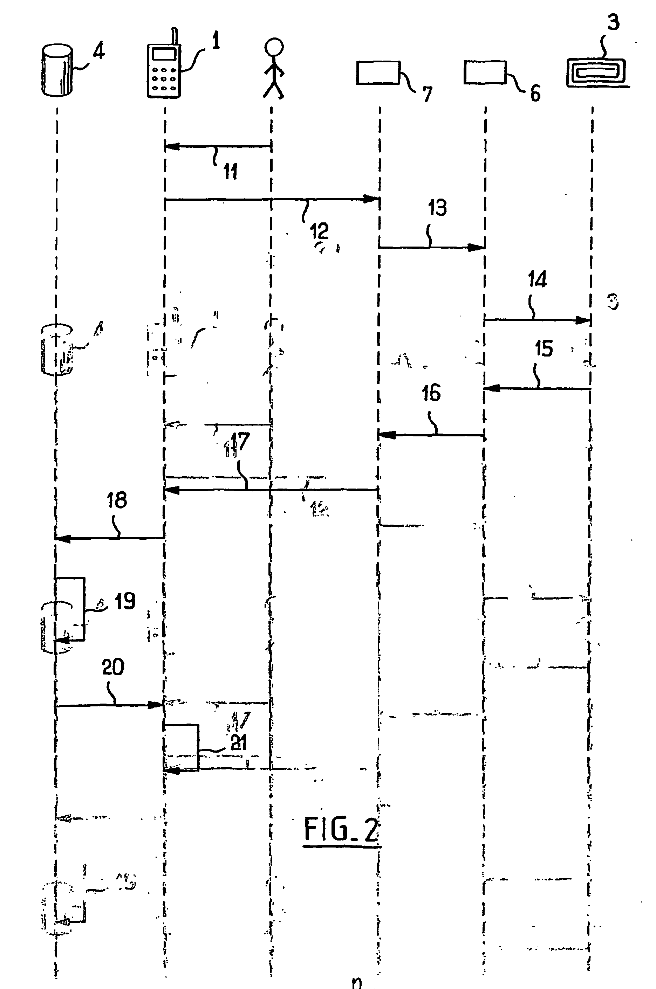

Ainsi que l'illustre la figure 2, le fonctionnement du système qui vient d'être décrit est le suivant.

Dans une première étape (étape 11), le personnel de contrôle actionne le clavier de son terminal téléphonique mobile afin de déclencher une séquence de contrôle.

A cet effet, il est par exemple prévu que ce personnel peut sélectionner un choix particulier dans un menu qui s'affiche sur l'écran de son terminal téléphonique portable.

Lorsqu'un tel actionnement est détecté par le terminal téléphonique mobile 1, celui-ci transmet aux moyens 7 du module 2 une requête de lecture de code (étape 12).

A réception de cette requête, les moyens 7 déclenchent l'émission d'un signal d'interrogation par les moyens 6 (étapes 13, 14) et attendent que ceux-ci leur transmettent le code émis en réponse par le transpondeur de l'étiquette 3 interrogée (étapes 15, 16).

A réception du code fourni en réponse par l'étiquette 3, celui-ci est transmis par les moyens 7 au terminal téléphonique portable 1 (étape 17), lequel émet à destination du serveur S un message (étape 18) demandant audit serveur S de contrôler que des redevances de stationnement ont été effectivement payées pour le véhicule qui correspond au code transmis (étape 19).

En réponse, le serveur S transmet au terminal téléphonique mobile 1 un message (étape 20), qui s'affiche sur l'écran du terminal téléphonique mobile 1 et qui indique au personnel de contrôle si la redevance de stationnement a été ou non payée (étape 21).

Selon la technologie du téléphone, le message peut être de type SMS (Short message service selon la terminologie anglo-saxonne couramment utilisée) ou encore GPRS ou UMTS.

Ainsi, le personnel de contrôle peut mettre en oeuvre un contrôle en temps réel du paiement des redevances de stationnement, avec un matériel particulièrement simple à manipuler et peu encombrant.

D'autres variantes de réalisation et mise en oeuvre que celle qui vient d'être décrite peuvent être envisagées.

En particulier, dans le cas où les moyens d'identification 3 sont de type à transpondeur, il peut être prévu que le module de lecture 2 est apte à réaliser une écriture de données dans la mémoire 5.

Par exemple, ledit module 2 peut transmettre au transpondeur, avec le signal d'interrogation, des informations lui donnant la date et l'heure du contrôle ; également, il peut être prévu que le terminal téléphonique mobile 1 transmette aux moyens 7 du module 2, à réception du signal SMS émis par le serveur S, une information sur le résultat du contrôle effectué.

Les différentes informations relatives aux opérations de contrôle ainsi stockées dans les moyens 3 sont ensuite susceptibles d'être lues par le conducteur du véhicule, au moyen d'un équipement prévu à cet effet.

On notera que l'invention a été décrite ici dans le cadre d'une application préférée qui est celle de la lecture de code d'identification de véhicule pour le contrôle de redevances de stationnement, mais qu'elle ne se veut aucunement limitée à cette seule application.

De nombreuses autres applications sont envisageables pour un ensemble comportant un module de lecture connecté à un terminal téléphonique mobile, le terminal téléphonique mobile comportant des moyens pour déclencher la lecture par ledit module de l'information portée par des moyens de stockage d'information, le module de lecture comportant des moyens pour transmettre au terminal téléphonique mobile un signal porteur de l'information lue.

Notamment, de tels ensembles sont avantageusement utilisés pour l'identification et le suivi, notamment à distance, d'objets mobiles : wagons, conteneurs, produits sensibles, etc..

## Revendications

1. Ensemble pour lire automatiquement une information portée par des moyens de stockage d'information aptes à être lus, l'information portée par des moyens de stockage identifiant un élément sur lequel lesdits moyens de stockage sont rapportés, ledit ensemble comportant un module de lecture qui est connecté à un terminal téléphonique mobile et qui comporte des moyens pour lire l'information portée par lesdits moyens de stockage, **caractérisé en ce que** le module de lecture est fixé mécaniquement sur le terminal téléphonique mobile et **en ce que** le terminal téléphonique mobile comporte des moyens pour déclencher la lecture par ledit module de l'information portée par des moyens de stockage d'information, le module de lecture comportant des moyens pour transmettre au terminal téléphonique mobile un signal porteur de l'information lue.

2. Ensemble selon la revendication 1, **caractérisé en ce que** l'information portée par les moyens de stockage comporte un code identifiant l'élément sur lequel lesdits moyens de stockage sont rapportés et **en ce que** le terminal téléphonique mobile comporte des moyens pour déclencher et gérer une séquence d'opérations comportant dans l'ordre :
- la lecture dudit code par le module de lecture,
- la transmission dudit code, par ledit terminal téléphonique, à un serveur de gestion à distance.

3. Ensemble selon la revendication 2, **caractérisé en ce que** ladite séquence d'opérations comporte en outre :
- la transmission à destination de l'utilisateur du terminal téléphonique d'un message transmis en réponse par le serveur de gestion audit terminal.

4. Ensemble selon la revendication 1, **caractérisé en ce que** la fixation mécanique du module de lecture est amovible.

5. Ensemble selon l'une des revendications précédentes, **caractérisé en ce que** le terminal téléphonique comporte des moyens de gestion qui affichent sur un écran dudit terminal une information lue par le module de lecture et/ou un message transmis en réponse par ledit serveur audit terminal.

6. Ensemble selon l'une des revendications précédentes, **caractérisé en ce que** le module de lecture et les moyens de stockage d'information comportent des moyens permettant audit module d'enregistrer des informations sur lesdits moyens de stockage.

7. Ensemble de contrôle à distance, **caractérisé en ce qu'**il comporte :
- un ensemble selon l'une des revendications précédentes destiné à être manipulé par un personnel de contrôle, pour relever automatiquement une information portée par des moyens de stockage d'information aptes à être lus et
- un serveur de gestion distant auquel ladite information est transmise par le terminal téléphonique dudit ensemble.

8. Ensemble selon la revendication 7, **caractérisé en ce que**, pour le contrôle à distance du paiement de redevances de stationnement, l'information portée par les moyens de stockage comporte un code d'identification de véhicule, ledit module de lecture comportant des moyens pour lire le code d'identification porté par les moyens de stockage, le serveur gérant le paiement à distance par les usagers.

9. Module de lecture comportant des moyens pour lire une information d'identification portée par les moyens de stockage, ledit module comportant des moyens de connexion à un terminal téléphonique, les moyens pour lire l'information portée par des moyens de stockage étant aptes à être déclenchés par un terminal téléphonique mobile connecté audit module, ledit module comportant en outre des moyens pour transmettre à ce terminal téléphonique l'information lue, ledit module comportant en outre des moyens pour sa fixation mécanique sur un terminal téléphonique mobile.

10. Module de lecture selon la revendication 9, **caractérisé en ce qu'**il comporte d'une part des moyens d'émission/réception qui sont aptes à émettre un signal d'interrogation à destination de moyens de stockage d'information de type à transpondeur et à recevoir le signal émis en réponse par ceux-ci, et d'autre part des moyens qui sont reliés à ces moyens d'émission/réception et qui gèrent les échanges dudit module avec le terminal téléphonique mobile.

11. Module de lecture selon l'une des revendications 9 ou 10, **caractérisé en ce que** les moyens de fixation mécaniques sont de type amovible.

12. Terminal téléphonique mobile comportant des moyens pour sa connexion à un module de lecture apte à lire une information d'identification portée par des moyens de stockage, **caractérisé en ce qu'**il comporte des moyens pour déclencher la lecture par ledit module de l'information portée par de tels moyens de stockage et des moyens pour recevoir l'information ainsi lue par ledit module et qui lui est transmise, ainsi que des moyens pour la fixation mécanique dudit module de lecture sur ledit téléphone.

13. Terminal selon la revendication 92, **caractérisé en ce que** ladite séquence d'opérations comporte en outre :
- la transmission à destination de l'utilisateur du terminal téléphonique d'un message transmis en réponse par le serveur de gestion audit terminal.

14. Terminal selon l'une des revendications 12 ou 13, **caractérisé en ce que** les moyens de fixation sont de type amovible.

15. Système de suivi ou de contrôle à distance, comportant un serveur de gestion à distance, des moyens aptes à être rapportés sur les éléments à contrôler et permettant notamment leur identification, des moyens pour lire automatiquement l'information portée par ces moyens et pour interroger à distance le serveur de gestion, **caractérisé en ce que** ces moyens comportent un module de lecture de code connecté à un terminal téléphonique mobile et fixé mécaniquement sur celui-ci, le module de lecture de code comportant des moyens pour transmettre au terminal téléphonique mobile un code lu, ledit terminal téléphonique mobile comportant des moyens pour déclencher et gérer une séquence d'opérations comportant dans l'ordre :
- la lecture par ledit module du code porté par des moyens d'identification,
- la transmission dudit code au serveur de gestion par ledit terminal téléphonique.
- la transmission à destination de l'utilisateur du terminal téléphonique d'un message transmis en réponse par ledit serveur audit terminal.

16. Système selon la revendication 15, **caractérisé en ce que** les moyens de fixation sont de type amovible.

## Patentansprüche

1. Einheit zum automatischen Lesen einer Information, die in Informationsspeichermitteln gehalten wird, die dazu geeignet sind ausgelesen zu werden, wobei die in Speichermitteln gehaltene Information ein Element identifiziert, auf dem die Speichermittel angebracht sind, wobei die Einheit ein Lesemodul umfasst, das mit einem mobilen Telefonendgerät verbunden ist und das Mittel zum Auslesen der in den Speichermitteln gehaltenen Information umfasst, **dadurch gekennzeichnet, dass** das Lesemodul mechanisch am mobilen Telefonendgerät befestigt ist, und **dadurch**, dass das mobile Telefonendgerät Mittel zum Auslösen des Auslesens der in Informationsspeichermitteln gehaltenen Information durch das Modul umfasst, wobei das Lesemodul Mittel umfasst, um zum mobilen Telefonendgerät ein Signal zu übermitteln, das die ausgelesene Information trägt.

2. Einheit nach Anspruch 1, **dadurch gekennzeichnet, dass** die in den Speichermitteln gehaltene Information einen Code umfasst, der das Element auf dem die Speichermittel angebracht sind identifiziert, und **dadurch**, dass das mobile Telefonendgerät Mittel umfasst, die eine Operationsfolge auslösen und verwalten, die der Reihe nach folgendes umfasst:
- das Auslesen des Codes durch das Lesemodul,
- das Übermitteln des Codes an einen entfernten Verwaltungsserver durch das Telefonendgerät.

3. Einheit nach Anspruch 2, **dadurch gekennzeichnet, dass** die Operationsfolge des weiteren folgendes umfasst:
- die Übermittlung einer Nachricht an den Benutzer des Telefonendgeräts, die vom Verwaltungsserver in Antwort an das Endgerät übermittelt wird.

4. Einheit nach Anspruch 1, **dadurch gekennzeichnet, dass** die mechanische Befestigung des Lesemoduls abnehmbar ist.

5. Einheit nach einem der vorhergehenden Ansprüche, **dadurch gekennzeichnet, dass** das Telefonendgerät Verwaltungsmittel umfasst, die auf dem Bildschirm des Endgeräts eine Information, die vom Lesemodul ausgelesen wurde, und/oder eine Nachricht, die als Antwort vom Server an das Endgerät übermittelt wurde, anzeigen.

6. Einheit nach einem der vorhergehenden Ansprüche, **dadurch gekennzeichnet, dass** das Lesemodul und die Informationsspeichermittel Mittel umfassen, die es dem Modul gestatten, Informationen auf den Speichermitteln aufzuzeichnen.

7. Einheit zur Fernüberwachung, **dadurch gekennzeichnet, dass** sie folgendes umfasst:
- eine Einheit gemäß einem der vorhergehenden Ansprüche, die dafür vorgesehen ist, durch Überwachungspersonal gehandhabt zu werden, um automatisch eine Information zu erfassen, die in Informationsspeichermitteln gehalten wird, die dazu geeignet sind ausgelesen zu werden und
- einen entfernten Verwaltungsserver, an den die Information vom Telefonendgerät der Einheit übermittelt wird.

8. Einheit nach Anspruch 7, **dadurch gekennzeichnet, dass** zur Fernüberwachung der Entrichtung von Parkgebühren die in den Speichermitteln gehaltene Information einen Fahrzeugidentifikationscode umfasst, wobei das Lesemodul Mittel zum Auslesen des in den Speichermitteln gehaltenen Identifikationscodes umfasst, wobei der Server die Fernzahlung durch die Nutzer verwaltet.

9. Lesemodul, das Mittel zum Lesen einer Identifikationsinformation umfasst, die in den Speichermitteln gehalten wird, wobei das Modul Mittel zur Verbindung mit einem Telefonendgerät umfasst, wobei die Mittel zum Lesen der in Speichermitteln gehaltenen Information dazu geeignet sind, von einem mobilen Telefonendgerät, das mit dem Modul verbunden ist, ausgelöst zu werden, wobei das Modul außerdem Mittel umfasst, um die ausgelesene Information an dieses Telefonendgerät zu übermitteln, wobei das Modul außerdem Mittel zu seiner mechanischen Befestigung auf einem mobilen Telefonendgerät umfasst.

10. Lesemodul nach Anspruch 9, **dadurch gekennzeichnet, dass** es zum einen Sende-/Empfangsmittel umfasst, die dazu geeignet sind, ein Abfragesignal an Informationsspeichermittel vom Transpondertyp zu senden und das von diesen als Antwort gesendete Signal zu empfangen, und zum anderen Mittel, die mit diesen Sende-/Empfangsmitteln verbunden sind und die den Austausch dieses Moduls mit dem mobilen Telefonendgerät verwalten.

11. Lesemodul nach einem der Ansprüche 9 oder 10, **dadurch gekennzeichnet, dass** die mechanischen Befestigungsmittel abnehmbar sind.

12. Mobiles Telefonendgerät, das Mittel zu seiner Verbindung mit einem Lesemodul umfasst, das dazu geeignet ist, eine Identifikationsinformation auszulesen, die in Speichermitteln gehalten wird, **dadurch gekennzeichnet, dass** es Mittel zum Auslösen des Auslesens der in solchen Speichermitteln gehaltenen Information durch das Modul umfasst und Mittel zum Empfangen der so vom Modul ausgelesenen und an es übermittelten Information, sowie Mittel zur mechanischen Befestigung des Lesemoduls auf dem Telefon.

13. Endgerät nach Anspruch 12, **dadurch gekennzeichnet, dass** die Folge von Operationen außerdem folgendes umfasst:
- die Übermittlung einer Nachricht an den Benutzer des Telefonendgeräts, die vom Verwaltungsserver in Antwort an das Endgerät übermittelt wird.

14. Endgerät nach einem der Ansprüche 12 oder 13, **dadurch gekennzeichnet, dass** die Befestigungsmittel abnehmbar sind.

15. System zur Verfolgung oder Fernüberwachung, das folgendes umfasst: einen Server zur Fernverwaltung, Mittel, die dazu geeignet sind, an den zu überwachenden Elementen angebracht zu werden und die insbesondere deren Identifikation gestatten, Mittel zum automatischen Auslesen der in diesen Mitteln gehaltenen Information und zur Fernabfrage des Verwaltungsservers, **dadurch gekennzeichnet, dass** diese Mittel ein Modul zum Lesen von Codes umfassen, das mit einem mobilen Telefonendgerät verbunden und mechanisch an diesem befestigt ist, wobei das Codelesemodul Mittel zum Übermitteln eines ausgelesenen Codes an das mobile Telefonendgerät umfasst, wobei das mobile Telefonendgerät Mittel umfasst, um eine Operationsfolge auszulösen und zu verwalten, die der Reihe nach folgendes umfasst:
- das Auslesen des in Identifikationsmitteln gehaltenen Codes durch das Modul,
- das Übermitteln des Codes an den Verwaltungsserver durch das Telefonendgerät,
- die Übermittlung einer Nachricht an den Benutzer des Telefonendgeräts, die vom Server in Antwort an das Endgerät übermittelt wird.

16. System nach Anspruch 15, **dadurch gekennzeichnet, dass** die Befestigungsmittel abnehmbar sind.

## Claims

1. A system for automatically reading data stored in data storage means that can be read, the data stored in storage means identifies an element on which said storage means are attached, said system includes a read module that is connected to a mobile telephone terminal and that includes means for reading the data stored in said storage means, **characterised in that** said read module is mechanically fixed to the mobile telephone terminal and **in that** the mobile telephone terminal includes means for initiating reading by the said module of the data stored in the data storage means, the read module incorporating means for transmitting a signal carrying the data read to the mobile telephone terminal.

2. A system in accordance with claim 1, **characterised in that** the data stored in the data storage means incorporates a code identifying the element on which said storage means are attached and **in that** the mobile telephone terminal incorporates means for initiating and managing a sequence of operations including in order:
- reading of the said code by the read module,
- transmission of the said code by the said telephone terminal to a remote management sever.

3. A system in accordance with claim 2, **characterised in that** the said sequence of operations also includes:
- transmission to the user of the telephone terminal of a message transmitted in response by the management server to the said terminal.

4. A system in accordance with claim 1, **characterised in that** the read module is mechanically fixed in a removable manner.

5. A system in accordance with one of the preceding claims, **characterised in that** the telephone terminal includes a management means that displays on the screen of said terminal data read by the read module and/or a response message transmitted by said server to said terminal.

6. A system in accordance with one of the preceding claims **characterised in that** the read module and the data storage means incorporate means for permitting said module to record the data in said storage means.

7. Remote control system, **characterised in that** it includes:
- a system according to any one of the preceding claims designed to be handled by an operator, for automatically collecting data stored in the data storage means that can be read, and
- a remote management server to which said data is transmitted by the telephone terminal of said system.

8. A system according to claim 7, **characterised in that**, for the remote control of the payment of parking fees, the data stored in the data storage means includes a vehicle identification code, said read module includes means for reading the identification code stored in the storage device, the server manages the remote payment made by users.

9. A read module that incorporates means for reading identification data stored in the data storage means, said module includes means for connecting to a telephone terminal; the means for reading the data stored in the storage means can be initiated by a mobile telephone terminal connected to said module; said module includes, additionally, means for transmitting the read data to said telephone terminal, said module includes, additionally, means for mechanically fixing it to a mobile telephone terminal.

10. A read module in accordance with claim 9, **characterised in that** it incorporates firstly a transmit/receive device that is able to transmit an interrogation signal to data storage means of the transponder type and receive the signal transmitted in response by the latter, and secondly means that are connected to the transmit/receive means to handle the exchanges between said module and the mobile telephone terminal.

11. A read module in accordance with claim 9 or 10, **characterised in that** the means for mechanically fixing it to the mobile telephone terminal are of the removable type.

12. A mobile telephone terminal that incorporates means for its connection to a read module that can read identification data stored in the storage means, **characterised in that** it includes means for initiating the reading by said module of the information stored by said storage means and means for receiving the data thus read by said module and that is transmitted to said module, as well as means for mechanically fixing said read module on said telephone.

13. A terminal in accordance with claim 12, **characterised in that** said sequence of operations further includes:
- transmission to the user of the telephone terminal of a message transmitted in response by the management server to the said terminal.

14. A terminal in accordance with claims 12 or 13, **characterised in that** the fixing means are removable type means.

15. A system for monitoring moving objects or for their remote control, incorporating a remote management server, means that can be attached to the elements to be controlled for permitting their identification, means for automatically reading data stored in the identification device and remotely interrogating the management server, **characterised in that** the device incorporates a code reading module connected to a mobile telephone terminal and mechanically fixed to the latter, the code reading module incorporating means for transmitting a read code to the mobile telephone terminal, said mobile telephone terminal incorporating means for initiating and managing a sequence of operations including in order:
- reading by the said module of the code stored in the identification device,
- transmission of the said code to the management sever by the said telephone terminal,
- transmission to the user of the telephone terminal of a message transmitted in response by the said server to the said terminal.

16. A system in accordance with claim 15, **characterised in that** the fixing means are of the removable type.
